# EUROPÄISCHE PATENTANMELDUNG

(11) **EP 2 027 928 A2**
(43) Veröffentlichungstag der Anmeldung: **25.02.2009**
(21) Anmeldenummer: 08105094.0
(22) Anmeldetag: 21.08.2008
(51) Int. Cl.: B02C 23/18, C13F 3/00, C13F 5/00

(54) **Mahlverfahren und Mahlprodukt**

(30) Priorität: 23.08.2007 DE 102007039838
(71) Anmelder: Pfeifer & Langen Kommanditgesellschaft, 50933 Köln (DE)
(72) Erfinder: Ludovici, Karl, Dr., 51465 Bergisch Gladbach (DE); Reidenbach, Udo, 41539 Dormagen (DE); Huwer, Thomas, 52457 Aldenhoven (DE); Bruhns, Martin, 50189 Elsdorf (DE); Bongers, Ulrich, 50169 Kerpen (DE)
(74) Vertreter: Lippert, Stachow & Partner

(57) **Zusammenfassung**

Die Erfindung betrifft ein Mahlverfahren zur Herstellung fein vermahlener Pulver aus grobkörnigen oder kristallinen Stoffen, die Lebensmittel und/oder Lebensmittelzusatzstoffe darstellen, mittels einer Prallmühle, wobei das Mahlgut einer Mahlkammer durch eine Mahlkammerzuführung zugeführt und das erhaltene Mahlprodukt durch eine Mahlkammerableitung abgeführt wird, bei welchem die Temperatur in der Mahlkammer ≥ 55°C beträgt und die relative Luftfeuchtigkeit in der Mahlkammer niedriger als für eine Konditionierung erforderlich ist. Hierdurch sind feinst vermahlene Pulver ohne Fehlgeschmack herstellbar.

## Beschreibung

Die Erfindung betrifft ein Mahlverfahren zur Herstellung fein vermahlener Pulver aus grobkörnigen oder kristallinen Stoffen, die Lebensmittel und/oder Lebensmittelzusatzstoffe darstellen, mittels einer Prallmühle, wobei das Mahlgut einer Mahlkammer durch eine Mahlkammerzuführung zugeführt und das erhaltene Mahlprodukt durch eine Mahlkammerableitung abgeführt wird. Ferner betrifft die Erfindung ein Mahlprodukt.

Mahlverfahren unter Verwendung von Prallmühlen sind vielfältig bekannt. Im Sinne der Erfindung wird bei einer Prallmühle der zu vermahlende grobkörnige oder kristalline Stoff mit einer gewissen Geschwindigkeit zum Aufprall auf ein Objekt gebracht, wodurch der Stoff bis zur gewünschten Endfeinheit zerkleinert wird. Die Aufprallgeschwindigkeit hängt unter anderem von der zu erzielenden Mahlfeinheit ab. Der zu vermahlende Stoff kann hierbei auf ein Fremdobjekt, wie z.B. einen Teil des Mahlwerkes der Mühle aufprallen, oder aber wie im Falle einer Strahlmühle auf andere Partikel des zu vermahlenden Stoffes, so dass dieser insgesamt zerkleinert wird.

Es wurden vielfältige Anstrengungen unternommen, um mittels derartiger Prallmühlen fein vermahlte Pulver einer gewünschten Feinheit zu erzielen. Hierbei stellt sich jedoch generell das Problem, dass das Mahlprodukt mit zunehmender Feinheit durch einen eingebrachten Fehlgeschmack beeinträchtigt wird, der den ursprünglich vorliegenden Geschmack negativ beeinflusst. Dies kann bis zur Unbrauchbarkeit des Mahlproduktes führen oder eine (zusätzliche) Aromatisierung des Mahlgutes mit einem Aromatisierungsmittel erforderlich machen, um den Fehlgeschmack zumindest im Wesentlichen oder vollständig zu überdecken. Ein derartiger zumeist metallischer Fehlgeschmack kann sich auf bisher im Einzelnen nicht vollständig verstandene Art und Weise aufgrund der Prozesse während des Mahlvorganges bilden. Eine Entfernung dieser Verunreinigungen durch Reinigungsverfahren wie Umkristallisation ist ohne Beeinflussung des Zerkleinerungsgrades des Mahlproduktes nicht möglich. Bei einer Zerkleinerung des Stoffes, die nicht zu einem mit Fehlgeschmack behafteten Mahlprodukt führt, kann jedoch nicht die gewünschte Endfeinheit erzielt werden, wodurch die Verwendung des Mahlproduktes beschränkt wird, z.B. wenn mittels Puderzucker Feinglasuren hergestellt werden sollen.

Es wurde bereits verschiedentlich versucht, zur Vermeidung der oben genannten Probleme den zu vermahlenden Stoff vor dem Mahlvorgang gegenüber Standardbedingungen deutlich abzukühlen, beispielsweise in gefrorenen Zustand zu überführen, um die Sprödigkeit des Stoffes zu erhöhen und dadurch dessen Zermahlung zu erleichtern. Dies ist jedoch mit einem hohen apparativen und Energieaufwand verbunden.

Der Erfindung liegt somit die Aufgabe zugrunde, ein Mahlverfahren bereitzustellen, durch welches fein oder feinst vermahlene Pulver in Form von Lebensmitteln und/oder Lebensmittelzusatzstoffen ohne Fehlgeschmack mit niedriger spezifischer Mahlenergie hergestellt werden können. Des Weiteren ist es Aufgabe der Erfindung, ein Mahlprodukt hoher Feinheit bereitzustellen, welches einen erweiterten Anwendungsbereich desselben ermöglicht.

Die Erfindung wird durch ein Mahlverfahren nach Anspruch 1 gelöst. Weiterhin wird die Erfindung durch ein Mahlprodukt nach den unabhängigen Ansprüchen 14, 15 gelöst. Erfindungsgemäß erfolgt somit die Vermahlung bei einer Temperatur in der Mahlkammer von ≥ 55°C, wobei die relative Luftfeuchtigkeit in der Mahlkammer niedriger als für eine Konditionierung im Hinblick auf eine Feuchtigkeitsaufnahme des erhaltenen Mahlproduktes ist. Die Temperatur und/oder die relative Luftfeuchtigkeit können auf diese Werte bzw. Bedingungen eingestellt sein.

Überraschenderweise konnte festgestellt werden, dass dadurch, dass die Temperatur in der Mahlkammer auf ≥ 55°C erhöht wird, ein fein bis feinst vermahlenes Pulver eines Lebensmittels und/oder Lebensmittelzusatzstoffes höchster Qualität mit zumindest im Wesentlichen ohne Fehlgeschmack erhalten werden kann. Das Pulver erfährt somit durch den erfindungsgemäßen Mahlvorgang keine oder keine nennenswerte geschmacklichen Veränderungen gegenüber dem Ausgangspulver (ausgenommen solche, die im Einzelfall aufgrund der Änderung des Verteilungsgrades des Pulvers resultieren könnten). Weiterhin wird überraschend festgestellt, dass durch die erfindungsgemäße Maßnahme die spezifische Mahlenergie des Mahlverfahrens signifikant verringert werden kann, z.B. bei gleicher Antriebsleistung der Mühle ein größerer Durchsatz erhalten wird oder bei gleichem Durchsatz ein geringerer Energieaufwand erforderlich ist. Es wird angenommen, dass sich bei der erfindungsgemäß gewählten Mahltemperatur und der relativen Feuchtigkeit in der Mahlkammer aufgrund von im Einzelnen noch nicht vollständig verstandener Vorgänge fehlgeschmacksbildende Stoffe während des Mahlvorganges praktisch nicht bilden. Die Mahlkammer ist hierbei der Bereich innerhalb der Mühle, in dem der Mahlvorgang abläuft.

Zwar sind verschiedentlich bereits Mahlverfahren vorgeschlagen worden, bei welchen die der Mahlkammer zugeführte Luft oder Atmosphäre erwärmt wird. So ist beispielsweise aus der EP 838 529 bekannt, die Temperatur in dem Mahlraum, in dem die Mühle aufgestellt ist, zu erhöhen, um eine Konditionierung der Stoffe während des Mahlverfahrens zu erzielen, so dass das resultierende fein vermahlte Mahlprodukt ohne zusätzliche Konditionierungsschritte lagerfähig ist und beispielsweise keine Feuchtigkeit aufnimmt. Aufgrund der unterschiedlichen Zielsetzung und des damit unterschiedlichen Temperatureinflusses auf den gewünschten Effekt erfolgt jedoch bei gegebener Feuchtigkeitsbeladung nur eine relativ geringe Temperaturerhöhung. Eine weitere Temperaturerhöhung wäre auch kontraproduktiv, da dann die erzielte Konditionierung nicht mehr vorliegen würde. Die Herstellung eines feinst vermahlenen Pulvers wie z.B. Puderzucker, welches zumindest im wesentlichen frei von Fehlgeschmack ist, ist durch das Verfahren nach der EP 838 529 somit nicht möglich, da die Bedingungen in der Mahlkammer nach anderen Gesichtspunkten einzustellen sind. Im Gegensatz hierzu erfolgt bei dem erfindungsgemäßen Verfahren der Mahlvorgang bei höheren Mahlkammertemperaturen, als solchen, bei denen zumindest im Wesentlichen eine Konditionierung erfolgt, und bei niedrigerer absoluter bzw. relativer Feuchtigkeit der Mahlraumatmosphäre, wie weiter unten näher beschrieben ist.

Für viele zu vermahlende Pulver hat es sich als vorteilhaft erwiesen, wenn in der Mahlkammer und/oder der Mahlkammerableitung, vorzugsweise benachbart oder unmittelbar benachbart der Mahlkammer, eine Temperatur von ≥ 50-55°C, gegebenenfalls ≥ 60-65°C oder ≥ 70-75°C oder höher eingestellt wird. Gegebenenfalls kann die Temperatur auch ≥ 80-85°C oder höher betragen. Hierzu kann jeweils auch die Eingangsluft in die Mahlkammer entsprechend eingestellt oder erwärmt werden. Die Eingangsluft kann auch die oben genannten Temperaturen unmittelbar aufweisen. In der Mahlkammer wird sich ein Temperaturgleichgewicht einstellen, dass von den weiteren Verfahrensbedingungen abhängt, beispielsweise von der durch den Mahlvorgang selber erzeugten Wärme und andererseits Wärmeverlusten der Mahlkammer an die Umgebung. Alternativ oder zusätzlich kann zur Einstellung der Temperatur in der Mahlkammer auch die Mahlkammerwandung und/oder mindestens eine Einrichtungen innerhalb der Mahlkammer wie z.B. das Mahlwerkes entsprechend erwärmt werden. Hierbei wird jeweils das Mahlgut durch die Mahlkammerableitung aus der Mahlkammer abgeführt.

Weiterhin hat es sich als oftmals vorteilhaft erwiesen, wenn in der Mahlkammer und/oder in der Mahlkammerableitung, vorzugsweise benachbart oder unmittelbar benachbart der Mahlkammer, eine Temperatur von ≤ 170-180°C, gegebenenfalls ≤ 150-160°C einstellt wird. Die Temperatur kann gegebenenfalls auch ≤ 130-140°C oder ≤ 110-120°C betragen, beispielsweise auch ≤ 90-100°C oder ≤ 80°C. Hierzu kann auch die der Mahlkammer zugeführte Eingangsluft auf eine geeignete Temperatur eingestellt oder erwärmt werden. Die Eingangsluft kann auch unmittelbar die oben genannten Temperaturen aufweisen.

Ferner konnte überraschenderweise festgestellt werden, dass durch eine zusätzliche geeignete Erhöhung der Feuchtigkeit der Mahlkammeratmosphäre gegenüber Standardbedingungen ein praktisch fehlgeschmacksfreies Mahlprodukt erhalten und die spezifische Mahlenergie des Mahlverfahrens weiter verringert werden kann, so dass z. B. bei gleicher Antriebsleistung der Mühle und ansonsten gleichen Verfahrensbedingungen, einschließlich gleicher Endfeinheit des Mahlproduktes, ein weiter erhöhter Durchsatz in kg Mahlgut je Stunde erzielbar ist. Zudem kann hierdurch die Verweildauer des Mahlgutes in der Mahlkammer weiter verringert werden. Unter Standardbedingungen im Sinne der Erfindung sind NTP-Bedingungen (25°C, 101 325 Pa) bei trockener Luft (Feuchtigkeit ca. 0 g/kg Luft) verstanden. Eine Feuchtigkeitsbeladung der Mahlkammeratmosphäre kann durch eine Feuchtigkeitsbeladung der der Mahlkammer zugeführten Eingangsluft erfolgen. Die Eingangsluft kann die oben genannten Temperaturen aufweisen.

Die Feuchtigkeitsbeladung der Mahlkammeratmosphäre und/oder der dieser zugeführten Eingangsluft kann ≥ 1-2 oder ≥ 3-4 g/kg Wasser bezogen auf trockene Luft betragen. Vorzugsweise kann die Feuchtigkeitsbeladung auch ≥ 5-6 g/kg oder ≥ 7-8 g/kg Wasser je Kilo trockene Luft betragen. Die Werte können sich jeweils auf die Eingangsluft unter Standardbedingungen beziehen oder Absolutwerte der der Mahlkammer zugeführten Eingangsluft darstellen.

Vorzugsweise beträgt die Feuchtigkeitsbeladung der Mahlraumatmosphäre oder der Eingangsluft ≤ 30 g/kg Wasser bezogen auf trockene Luft, beispielsweise ≤ 20-25 g/kg oder ≤ 14-16 g/kg. Die Feuchtigkeitsbeladung kann gegebenenfalls auch ≤ 10-12 g/kg betragen. Auch dies können Werte unter Standardbedingen oder Absolutwerte der unmittelbar der Mahlkammer zugeführten Eingangsluft sein.

Vorzugsweise beträgt die relative Luftfeuchtigkeit in der Mahlkammer ≤ 20%, vorzugsweise ≤ 15-17%, besonders bevorzugt ≤ 10-12%, gegebenenfalls auch ≤ 8-9%. Die relative Luftfeuchtigkeit in der Mahlkammer kann ferner ≥ 1-2%, ≥ 3-4% oder ≥ 5-6% betragen. Gegebenenfalls kann auch die Luft in der Mahlkammerableitung, vorzugsweise benachbart oder unmittelbar benachbart der Mahlkammer, die oben angegebene relative Luftfeuchtigkeit aufweisen.

Die jeweils genannten Temperaturen und/oder Feuchtigkeitsgehalte bzw. -beladungen der Eingangsluft können jeweils benachbart, vorzugsweise unmittelbar benachbart, dem Mahlkammereingang vorliegen.

Im Sinne der Erfindung wird der Begriff "Luft" lediglich der Einfachheit halber verwendet, es kann hier jedes geeignete Fluid oder Gas eingesetzt werden, welches in dem Mahlverfahren verwendbar ist. Insbesondere kann dies auch Luft mit einer modifizierten Zusammensetzung, beispielsweise einem erhöhten Gehalt an Stickstoff und/oder Edelgasen oder allgemein mit einem verminderten Sauerstoffgehalt sein, oder auch zumindest im Wesentlichen reiner Stickstoff und/oder reine Edelgase wie z.B. Argon. Die Zusammensetzung der Luft kann jeweils auch von dem zu vermahlenden Stoff abhängen, beispielsweise wenn oxidationsempfindliche Stoffe wie z.B. Stoffe mit einem höheren Anteil an ungesättigten Verbindungen wie Fettsäuren, Hydroxyverbindungen oder dergleichen zu vermahlen sind.

Das Mahlgut kann jeweils zusammen mit der Eingangsluft der Mahlkammer zugeführt werden, wobei die Eingangsluft wie oben beschrieben eine gegenüber Standardbedingungen erhöhte Temperatur und/oder Feuchtigkeit aufweisen kann. Die Eingangsluft kann somit auch als Transportmittel für das Mahlgut dienen, so dass dieses z.B. mittels der Eingangsluft in die Mahlkammer eingeblasen wird. Gegebenenfalls können die Eingangsluft zur Einstellung von Temperatur und/oder Feuchtigkeit in der Mahlkammer und das Mahlgut auch getrennt wie z.B. über separate Zuleitungen der Mahlkammer zugeführt werden.

Die Temperatur und/oder Feuchtigkeit (relativ oder absolut) in der Mahlkammer, gegebenenfalls gemessen in der Mahlkammerableitung benachbart oder unmittelbar benachbart der Mahlkammer, kann mittels einer geeigneten Regelung oder Steuerung auf dem jeweiligen Sollwert gehalten werden. Die zulässige Abweichung von dem Sollwert kann ≤ 4-5%, vorzugsweise ≤2-3% oder ≤ 1% betragen.

Als Maß für die Temperatur, Feuchtigkeit und/oder Feuchtigkeitsbeladung in der Mahlkammer können diese gegebenenfalls jeweils auch in der Mahlkammerableitung, vorzugsweise benachbart oder unmittelbar benachbart der Mahlkammer bestimmt werden.

Insbesondere können die Temperatur und/oder Feuchtigkeit (g Wasser je Kilo Luft) in der Mahlkammer derart eingestellt werden, dass gegenüber Standardbedingungen bei ansonsten gleichen Verfahrensbedingungen wie z.B. Antriebsleistung und Endfeinheit eine Verringerung der spezifischen Mahlenergie des Mahlverfahrens um ≥ 10- 15% oder ≥ 20-25%, vorzugsweise um ≥ 30-40% oder gegebenenfalls auch um ≥ 50-60% erzielt wird, besonders bevorzugt derart, dass eine minimale spezifische Mahlenergie des Verfahrens erzielt wird. Die Verringerung der spezifischen Mahlenergie kann sich alternativ auch auf ansonsten gleiche Verfahrensbedingungen bei trockener Luft beziehen.

Die spezifische Mahlenergie [kWh/t] ist hierbei das Verhältnis von Antriebsleistung der Mühle bei einem Durchsatz von einer Tonne Mahlgut je Stunde bei gegebenem Zerkleinerungsgrad.

Es versteht sich, dass die in der Mahlkammer eingestellte Maximaltemperatur und/oder Feuchtigkeit durch das Mahlgut beschränkt sein kann, beispielsweise im Falle von oxidationsempfindlichen Stoffen oder Stoffen mit niedrigen Zersetzungs- oder Degradationstemperaturen wie z.B. Zucker, Hydroxyverbindungen oder dergleichen. Die Mahlkammertemperatur und -feuchtigkeit sind derart zu wählen, dass keine unerwünschten Änderungen an dem Mahlgut auftreten.

Das der Mahlkammer zugeführte Mahlgut kann einen Gehalt an freier Feuchtigkeit von ≤ 7-10 Gew.-% oder ≤ 3-5 Gew.-%, vorzugsweise ≤ 1-2 Gew.-% oder ≤ 0,3-0,5 Gew.-% aufweisen, besonders bevorzugt ≤ 0,1-0,2 Gew.-% oder ≤ 0,03-0,05 Gew.-%. Als freie Feuchtigkeit sei hierbei der Gewichtsanteil an physikalisch reversibel gebundenem Wasser des zu vermahlenden Stoffes verstanden, der bei Temperaturen ≤ 100°C oder unterhalb der Zersetzungstemperatur des zu vermahlenden Stoffes entfernbar ist.

Das der Mahlkammer zugeführte Mahlgut ist vorzugsweise rieselfähig.

Das der Mahlkammer zugeführte Mahlgut kann eine Korngröße d⁵⁰ von ≤ 3-5 mm, vorzugsweise ≤ 1,5-2 mm oder ≤ 0,8-1 mm aufweisen.

Vorteilhafterweise wird nach dem Verfahren das Mahlgut auf eine Korngröße d⁵⁰ von ≤ 20-25 µm gemahlen, vorzugsweise auf eine Korngröße d⁵⁰ von ≤ 15-17 µm oder ≤ 10-12 µm. Insbesondere kann das Mahlprodukt eine Korngröße d⁵⁰ in dem Bereich von 2-12 µm, vorzugsweise 4-10 µm oder 6-10 µm aufweisen. Ferner kann das erfindungsgemäße Mahlprodukt eine Korngröße d⁹⁹ von ≤ 50-75 µm, vorzugsweise ≤ 30-40 µm oder ≤ 20-25 µm aufweisen. Die Werte d⁵⁰ und d⁹⁹ seien hier stets als die Durchgangssumme in Höhe von 50 bzw. 99 Gew.-% der Massenverteilung in Bezug auf die jeweilige Siebmaschenweite verstanden.

Vorzugsweise erfolgt nach dem Mahlvorgang eine Konditionierung des Mahlproduktes, die insbesondere dem Mahlvorgang unmittelbar nachfolgen kann. Die erfindungsgemäße Erhöhung von Temperatur und/oder Feuchtigkeit der Mahlkammeratmosphäre kann zu Mahlbedingungen führen, bei denen das erhaltene Mahlprodukt einer weiteren Konditionierung bedarf, um ausreichend lagerbeständig zu sein, beispielsweise im Hinblick auf eine Feuchtigkeitsaufnahme. Die Neigung zur Feuchtigkeitsaufnahme kann so hoch sein, dass das bei einer üblichen Auslagerungsatmosphäre ausgelagerte Mahlprodukt zum Verklumpen neigt. Dies kann insbesondere beim Vermahlen von Zucker (z.B. Glukose) zu Puderzucker der Fall sein, aber auch beim Vermahlen anderer Stoffe wie Milchtrockenprodukte.

Das durch das erfindungsgemäße Mahlverfahren unmittelbar erhaltene Mahlprodukt ist somit im Hinblick auf die Feuchtigkeitsaufnahme nicht konditioniert, die anschließende Feuchtigkeitsaufnahme des Mahlproduktes kann ≥ 0,02 bis 0,03 Gew.-%, ≥ 0,04 bis 0,05 Gew.-% oder auch ≥ 0,06 Gew.-% desselben betragen. Dies kann für übliche Auslagerungsbedingungen bis zur Gewichtskonstanz des ausgelagerten Mahlproduktes gelten oder alternativ für übliche Auslagerungsbedingungen bis zum Gewichtsmaximum des Mahlproduktes, beispielsweise falls bei längeren Auslagerungszeiten eine Gewichtsabnahme beispielsweise aufgrund von Rekristallisation erfolgt. Die Auslagerungsbedingungen, unter denen die obige Gewichtszunahme erfolgt, können hierbei Raumtemperatur (22°C) bei einer relativen Luftfeuchte von ca. 50%, beispielsweise zwischen 30% bis 60% sein. Die Auslagerungszeit kann hierbei mehrere Stunden (z.B. ca. 12-15 Stunden) betragen, wobei in der Regel in diesem Zeitraum die Gewichtszunahme (absolut) ihren Maximalwert erreicht und in die Sättigung ausläuft. Bei sehr langen Auslagerungen von z.B. 1-2 oder mehr Wochen kann z.B. aufgrund von Rekristallisation eine Gewichtsabnahme erfolgen. Im Falle von Zucker, insbesondere Kristallzucker, kann die oben genannte Gewichtszunahme nach ca. 12 Stunden festgestellt werden, bei Auslagerung von ca. 1-2 Wochen oder mehr gegebenenfalls wieder eine gewisse Gewichtsabnahme. Allgemein kann die Feuchtigkeitsaufnahme des unmittelbar erhaltenen Mahlgutes eine gewisse oder zum Teil starke Verklumpung hervorrufen, die unter Ausbildung von Feststoffbrücken zwischen den Mahlproduktpartikeln erfolgen kann. Zugleich kann mit der Verklumpung eine zum Teil starke Rekristallisation des Mahlproduktes einhergehen. Aufgrund der Rekristallisation kann der Wassergehalt des Mahlproduktes gegebenenfalls anschließend wieder sinken. Allgemein kann die Nicht-Konditionierung des unmittelbar erhaltenen Mahlproduktes somit zu einer Veränderung der "Korngrößeverteilung" und/oder der Rieselfähigkeit des Mahlproduktes bei Auslagerung führen, beispielsweise bei den oben genannten üblichen Auslagerungsbedingungen, wobei die Korngröße sich hierbei zumeist durch die Verklumpung im Hinblick auf die Sekundärkorngröße ändert und die Primärkorngröße der Teilchen zumindest im Wesentlichen unverändert sein kann. Die Verklumpung und/oder Rekristallisation bei der beschriebenen Auslagerung kann dazu führen, dass der Grobkornanteil des Mahlproduktes in Gewichtsprozent mit beispielsweise einer Korngröße von ≥ 0,2mm (z.B. im Siebverfahren bestimmt), nach der Auslagerung ≥ 5 bis 10 Gew.-% oder ≥ 15 bis 20 Gew.-% des Mahlproduktes ausmacht, wobei der Grobkornanteil des Mahlproduktes mit einer Korngröße von ≥ 0,2mm vor der Auslagerung 0 Gew.-% betragen kann.

Das Mahlprodukt kann beispielsweise dadurch konditioniert werden, dass dieses einer Atmosphäre mit anderer Temperatur und/oder Feuchtigkeitsbeladung als den Mahlkammerbedingungen ausgesetzt wird und/oder durch Zusatz eines Konditionierungsmittels wie beispielsweise eines Rieselhilfsmittels, wobei hier herkömmliche Mittel einsetzbar sind. Die Konditionierung - falls erforderlich - wird vorzugsweise in dem dem Mahlverfahren unmittelbar nachfolgenden Schritt des jeweiligen Herstellungsverfahrens durchgeführt.

Das Mahlverfahren kann unter Verwendung einer Rotorprallmühle, beispielsweise in Ausführung einer Stiftmühle, Hammermühle, Prallplattenmühle, Sichtermühle oder dergleichen durchgeführt werden, oder auch unter Verwendung einer Strahlmühle, bei der somit zumindest zwei Strahlen des zu vermahlenden Stoffes mit einander zum Aufprall gelangen.

Das erfindungsgemäße Verfahren hat sich insbesondere zum Vermahlen von Lebensmitteln und/oder Lebensmittelzusatzstoffen, die dem Lebensmittelrecht unterliegen können, bewährt, da das Verfahren zu einem Mahlprodukt ohne oder ohne nennenswerten Fehlgeschmack führt und durch die Verringerung der spezifischen Mahlenergie die Wärmeeinbringung in die Lebensmittel und/oder Lebensmittelzusatzstoffe vermindert wird, was oftmals erwünscht ist. Die unten genannten Stoffe können jeweils Bestandteile von Lebensmitteln oder Lebensmittelzusatzstoffen sein, die zusammen mit diesen Stoffen vermahlen werden und/oder denen die vermahlten Stoffe nachträglich beigemengt werden. Das Verfahren ist jedoch auch bei anderen Lebensmitteln oder Lebensmittelzusatzstoffen einsetzbar. Das Mahlgut muss jeweils in einer für das Mahlverfahren geeigneten Form vorliegen, z.B. in fester und/oder rieselfähiger Form, in die sie beispielsweise durch Auskristallisation, Ausfällung, Feuchtigkeitsentzug wie Gefriertrocknung oder dergleichen überführt werden können.

Insbesondere ist das erfindungsgemäße Verfahren vorteilhaft geeignet zum Vermahlen eines oder mehrerer Stoffe ausgewählt aus der Gruppe bestehend aus Zucker, Zuckeraustauschstoffe, Hydrokolloide, Verdickungsmittel, Milchtrockenprodukte, Molkenprodukte, Molkenproteinkonzentrat, Fasern, Ballaststoffe, Farbstoffe, Stärke (einschließlich modifizierte Stärke), Proteine, Vitamine, Säuren, Aminosäuren. Die genannten Stoffe wie auch z.B. Fasern oder Farbstoffe stellen jeweils vorzugsweise Lebensmittel und/oder Lebensmittelzusatzstoffe dar.

Der zu vermahlende Zucker oder die Zuckerart können Mono- oder Disaccharide sein wie beispielsweise sein Glucose, Fructose, Dextrose, Lactose, Maltose, Maltodextrin, Saccharose oder dergleichen, wobei die Zucker vorzugsweise als Lebensmittel oder Lebensmittelzusatzstoffe einsetzbar sind. Die Zucker können in kristalliner Form aber gegebenenfalls auch in Form eines verfestigten Sirups vorliegen, beispielsweise in Form eines gefriergetrockneten Sirups. Hier ist insbesondere Glukosesirup zu nennen.

Als Zuckeraustauschstoffe können beispielsweise Isomalt, Sorbit, Mannit, Xylith, Erythrit, Polydextrose, Inulin, Oligofructose eingesetzt werden, ohne hierauf beschränkt zu sein.

Die erfindungsgemäß zu vermahlenden Hydrokolloide und Verdickungsmittel können beispielsweise Pektine, Johannesbrotkernmehl, Carragen, Alginat oder dergleichen sein.

Die zu vermahlenden Milchtrockenprodukte können beispielsweise Milchpulver wie Magermilchpulver, Vollmilchpulver, Laktose oder dergleichen sein.

Ferner ist das Verfahren vorteilhaft anwendbar bei Säuren, die als Bestandteil von Lebensmitteln oder Lebensmittelzusatzstoffen und damit zur Nahrungsaufnahme vorgesehen sind (d.h. Genußsäuren) wie beispielsweise Ascorbinsäure, Weinsäure, Zitronensäure, Aminosäuren und dergleichen. Entsprechendes gilt auch allgemein für Vitamine, Provitamine und dergleichen.

Das erfindungsgemäße Verfahren ist ferner einsetzbar beim Vermahlen von Konzentraten oder Isolaten. Die Konzentrate und Isolate, d.h. aus einem Substrat isolierten Bestandteile, können verschiedenen Ursprungs sein, insbesondere natürlichen Ursprungs. Die Konzentrate und Isolate können auch vor deren Vermahlung mit weiteren Komponenten wie Geschmacksverstärkern versetzt sein.

Zum Vermahlen von Zucker, insbesondere Saccharose, oder zum Vermahlen von Trockenmilchpulver kann die Mahlkammertemperatur während des Mahlvorganges 60-100°C oder höher, vorzugsweise 65-90°C, besonders bevorzugt 70-85°C betragen. Die relative Feuchtigkeit in der Mahlkammer beträgt hierbei vorzugsweise 2-15%, besonders bevorzugt 3-12%, insbesondere 5-10%.

Durch das erfindungsgemäße Verfahren kann somit ein Mahlprodukt in Form eines Lebensmittels und/oder Lebensmittelzusatzstoffes erhalten werden, welches zumindest im Wesentlichen oder praktisch frei von Fehlgeschmack, insbesondere metallischem Fehlgeschmack, ist, wobei das Mahlprodukt vorzugsweise nicht aromatisiert ist. Ein derartiger unerwünschter Fehlgeschmack tritt bei entsprechenden herkömmlichen fein oder feinst vermahlten Mahlprodukten gleicher Feinheit zumeist aufgrund der unterschiedlichen Mahlbedingungen auf, was auf einen Eintrag von geringsten Mengen an Fremdstoffen während des Mahlvorganges zurückgeführt wird.

Ferner betrifft die Erfindung allgemein ein derartiges fehlgeschmacksfreies, nicht aromatisiertes Mahlprodukt in Form eines Lebensmittels und/oder Lebensmittelzusatzstoffes, welches eine Korngröße d⁵⁰ von ≤ 20 µm, vorzugsweise ≤ 15-17 µm oder ≤ 10-12 µm oder besonders bevorzugt ≤ 8-9 µm aufweisen kann. Das Mahlprodukt kann insbesondere ein Lebensmittel oder Lebensmittelzusatzstoff sein, insbesondere ein Zucker, Zuckeraustauschstoff, Milchtrockenprodukt, Vitamin, Säure, Protein, oder Farbstoff. Die obigen Ausführungen zu dem erfindungsgemäßen Verfahren können bezüglich des erhältlichen Verfahrensproduktes im Übrigen vollinhaltlich auf das hier genannte fehlgeschmacksfreie Mahlprodukt zutreffen, einschließlich der konditionierten Verfahrensprodukte.

Die Erfindung betrifft weiterhin ein durch das oben beschriebene Verfahren erhältliches Mahlprodukt, das insbesondere fehlgeschmacksfrei sein kann.

Die Erfindung wird nachfolgend anhand von Ausführungsbeispielen beschrieben.

### Vergleichsbeispiel 1 (nicht erfindungsgemäß)

In einer einstufigen Sichtermühle werden 150 kg/h Kristallzucker mit einem Korndurchmesser d⁵⁰ von 0,6 mm auf eine Endfeinheit von d⁵⁰ = 8 µm gemahlen. Durch die Sichtermühle wird ein Luftstrom von 1.200 m³/h gesaugt. Die Eingangsluft hat eine Temperatur von 22°C und eine Wasserbeladung von 7,5 g/kg. Die Ausgangsluft hat eine Temperatur von 45°C. Die Antriebsleistung der Mühle beträgt 15 kW. Die eingesetzte Luft ist im Wesentlichen trockene Luft. Das Mahlprodukt weist einen starken Fehlgeschmack auf, so dass Mahlgut zur weiteren Verwendung im Lebensmittelbereich zu aromatisieren ist.

### Ausführungsbeispiel 1

In Abwandlung des Verfahrens nach dem Vergleichsbeispiel wird die Eingangsluft vor Eintritt in den Mahlraum auf 85°C erwärmt. Die Temperatur der aus dem Mahlraum austretenden Luft beträgt 73°C. Bei ansonsten gleichen Bedingungen wie in dem Vergleichsbeispiel, insbesondere gleicher Antriebsleistung und Endfeinheit, erhöht sich der Durchsatz auf 220 kg/h. Der so erhaltene fein vermahlene Kristallzucker (Puderzucker) verklumpt an der Luft innerhalb kurzer Zeit unter Aufnahme von Feuchte und wird durch eine thermische und/oder Feuchtigkeitsbehandlung und/oder unter Verwendung von Rieselhilfsmitteln nachkonditioniert. Das Mahlprodukt ist ohne Aromatisierung zumindest im Wesentlichen oder praktisch fehlgeschmacksfrei.

### Ausführungsbeispiel 2

In Abwandlung des Vergleichsbeispiels und bei ansonsten gleichen Verfahrensbedingungen wird die in den Mahlraum eintretende Eingangsluft auf 100°C erwärmt und eine Feuchtigkeitsbeladung durch Eindüsen von Wasser in den Luftstrom auf 9 g/kg erhöht. Die Temperatur der aus dem Mahlraum austretenden Luft beträgt 73°C. Bei gleicher Antriebsleistung und gleicher Endfeinheit wie in dem Vergleichsbeispiel erhöht sich der Durchsatz auf 290 kg/h. Der so erhaltene fein vermahlene Kristallzucker (Puderzucker) verklumpt an der Luft innerhalb von kurzer Zeit unter Aufnahme von Feuchte. Der vermahlene Zucker wird daher einer Nachkonditionierung ausgesetzt und hierbei entweder einer geeigneten Temperatur und/oder Luftfeuchtigkeit ausgesetzt und/oder mit Rieselhilfsmitteln vermischt. Das Mahlprodukt ist ohne Aromatisierung zumindest im Wesentlichen oder praktisch fehlgeschmacksfrei.

Es versteht sich, dass entsprechend fein vermahlte Pulver anderer Lebensmittel oder Lebensmittelzusatzstoffe herstellbar sind, wobei die einzustellende Temperatur und/oder Feuchtigkeit in dem Mahlverfahren auf den jeweiligen Stoff einzustellen sind, insbesondere wenn das Mahlverfahren im Hinblick auf den Durchsatz und/oder die Endfeinheit des Mahlproduktes optimiert wird. Insgesamt sind hierdurch Lebensmittel und Lebensmittelzusatzstoffe in fein oder feinst vermahlter Form ohne oder ohne nennenswerten Fehlgeschmack herstellbar.

## Patentansprüche

1. Mahlverfahren zur Herstellung fein vermahlener Pulver aus grobkörnigen oder kristallinen Stoffen, die Lebensmittel und/oder Lebensmittelzusatzstoffe darstellen, mittels einer Prallmühle, wobei das Mahlgut einer Mahlkammer der Mühle durch eine Mahlkammerzuführung zugeführt und das erhaltene Mahlprodukt durch eine Mahlkammerableitung abgeführt wird, **dadurch gekennzeichnet, dass** die Vermahlung unter Bedingungen erfolgt, bei welchen die Temperatur in der Mahlkammer ≥ 55°C beträgt, und die relative Luftfeuchtigkeit in der Mahlkammer niedriger als für eine Konditionierung des erhaltenen Mahlproduktes erforderlich ist.

2. Verfahren nach Anspruch 1, **dadurch gekennzeichnet, dass** die Eingangsluft in die Mahlkammer derart erwärmt wird, dass sich in der Mahlkammer und/oder in der Mahlkammerableitung eine Temperatur von ≥ 65°C einstellt,
und/oder
dass die Eingangsluft derart erwärmt wird, dass sich in der Mahlkammer und/oder in der Mahlkammerableitung eine
Temperatur von ≤ 160-180°C einstellt.

3. Verfahren nach einem der Ansprüche 1 bis 2, **dadurch gekennzeichnet, dass** zusätzlich die Feuchtigkeit der Mahlkammeratmosphäre gegenüber Standardbedingungen erhöht wird.

4. Verfahren nach einem der Ansprüche 1 bis 3, **dadurch gekennzeichnet, dass** die Temperatur und/oder Feuchtigkeit in der Mahlkammer derart eingestellt werden, dass gegenüber Standardbedingungen und ansonsten gleichen Verfahrensbedingungen eine Verringerung der spezifischen Mahlenergie des Mahlverfahrens um ≥ 10 bis 20% erfolgt.

5. Verfahren nach einem der Ansprüche 1 bis 4, **dadurch gekennzeichnet, dass** die relative Luftfeuchtigkeit in der Mahlkammer und/oder in der Mahlkammerableitung in dem Bereich von 2-15% liegt.

6. Verfahren nach einem der Ansprüche 1 bis 5, **dadurch gekennzeichnet, dass** die Feuchtigkeitsbeladung der Mahlkammeratmosphäre und/oder in der Mahlkammerableitung ≥ 2 bis 4 g/kg bezogen auf trockene Luft beträgt.

7. Verfahren nach einem der Ansprüche 1 bis 6, **dadurch gekennzeichnet, dass** die Feuchtigkeitsbeladung der Mahlkammeratmosphäre und/oder in der Mahlkammerableitung ≤ 30 g/kg bezogen auf trockene Luft beträgt.

8. Verfahren nach einem der Ansprüche 1 bis 7, **dadurch gekennzeichnet, dass** nachfolgend dem Mahlvorgang eine Konditionierung des Mahlproduktes erfolgt.

9. Verfahren nach Anspruch 8, **dadurch gekennzeichnet, dass** die Konditionierung des Mahlproduktes durch Aussetzen desselben einer Atmosphäre mit anderer Temperatur und/oder Feuchtigkeitsbeladung als der Werte in der Mahlkammer erfolgt.

10. Verfahren nach Anspruch 8 oder 9, **dadurch gekennzeichnet, dass** nachfolgend zu dem Mahlvorgang eine Konditionierung des Mahlproduktes durch Zusatz von Konditionierungsmitteln erfolgt.

11. Verfahren nach einem der Ansprüche 1 bis 10, **dadurch gekennzeichnet, dass** die Mühle eine Sichtermühle oder eine Strahlmühle ist.

12. Verfahren nach einem der Ansprüche 1 bis 11, **dadurch gekennzeichnet, dass** das Mahlgut ein Zucker oder ein Milchpulver ist und dass in der Mahlkammer die Temperatur ≥ 60°C beträgt und die relative Feuchtigkeit in dem Bereich von 3-12% liegt.

13. Verfahren nach einem der Ansprüche 1 bis 12, **dadurch gekennzeichnet dass** das Mahlgut auf eine Korngröße d⁵⁰ von ≤ 20-25 µm gemahlen wird.

14. Mahlprodukt in fein vermahlener Form, welches ein Lebensmittel und/oder einen Lebensmittelzusatzstoff darstellt, welches vorzugsweise zumindest im Wesentlichen frei von Fehlgeschmack ist und welches eine Korngröße d⁵⁰ von ≤ 15-20 µm aufweist.

15. Mahlprodukt, wahlweise nach Anspruch 14, erhältlich aus einem Verfahren nach einem der Ansprüche 1 bis 13.

16. Mahlprodukt nach Anspruch 14 oder 15, **dadurch gekennzeichnet, dass** das Mahlprodukt ausgewählt ist aus der Gruppe bestehend aus Zucker und Zuckerarten, Zuckeraustauschstoffe, Hydrokolloide, Verdickungsmittel, Milchtrockenprodukte, Molkenprodukte, Molkenproteinkonzentrat, Fasern, Ballaststoffe, Farbstoffe, Stärke (einschließlich modifizierte Stärke), Proteine, Säuren, Vitamine, Aminosäuren.
